Europäisches Patentamt

European Patent Office

Office européen des brevets

(19)

(11) Numéro de publication : **0 081 431**
**B1**

# (12) FASCICULE DE BREVET EUROPÉEN

(45) Date de publication du fascicule du brevet :
21.11.85

(21) Numéro de dépôt : 82402207.3

(22) Date de dépôt : 03.12.82

(51) Int. Cl.⁴ : **G 21 C 5/06**

(54) **Dispositif de fixation d'un assemblage combustible sur la plaque inférieure de support du coeur, dans un réacteur nucléaire.**

(30) Priorité : 04.12.81 FR 8122754

(43) Date de publication de la demande :
15.06.83 Bulletin 83/24

(45) Mention de la délivrance du brevet :
21.11.85 Bulletin 85/47

(84) Etats contractants désignés :
BE DE FR GB IT

(56) Documents cités :
FR-A- 2 195 823
FR-A- 2 226 726
FR-A- 2 393 402
GB-A- 1 159 971

(73) Titulaire : FRAMATOME ET CIE.
Tour Fiat 1, Place de la Coupole
F-92400 Courbevoie (FR)

(72) Inventeur : Desfontaines, Guy
18 rue Jean Jaurès
F-92800 Puteaux (FR)

(74) Mandataire : Fort, Jacques
CABINET PLASSERAUD 84, rue d'Amsterdam
F-75009 Paris (FR)

Jouve, 18, rue St-Denis, 75001 Paris, France

## Description

L'invention concerne un réacteur nucléaire comportant des assemblages combustibles fixés sur une plaque inférieure du cœur.

Un réacteur nucléaire, tel qu'un réacteur à eau sous pression comporte un cœur formé par des assemblages prismatiques disposés côte à côte à l'intérieur de la cuve du réacteur et reposant sur la plaque inférieure de support du cœur disposée transversalement par rapport à l'axe de la cuve.

Chacun des assemblages est constitué par un faisceau de crayons combustibles parallèles placés entre deux embouts et dirigés suivant la hauteur de l'assemblage. Les assemblages reposent par un de leurs embouts ou embout inférieur sur la plaque inférieure de support du cœur, de façon que la direction des crayons combustibles ou direction axiale de l'assemblage soit verticale. Chacun des assemblages est disposé sur la plaque inférieure de support du cœur en concordance avec une ouverture traversant cette plaque.

A sa partie supérieure, le cœur est limité par une plaque horizontale parallèle à la plaque de support du cœur également percée d'ouvertures en face de chacun des assemblages combustibles.

De cette façon, le fluide de réfrigération du réacteur, par exemple l'eau sous pression, amené sous la plaque inférieure du cœur traverse les assemblages de bas en haut en les refroidissant et ressort à la partie supérieure du cœur pour le transfert de la chaleur de celui-ci vers les échangeurs de chaleur.

Dans le cas de certains réacteurs à eau sous pression, les assemblages ont une section transversale hexagonale et sont disposés les uns à côté des autres dans le cœur du réacteur de façon à constituer une maille régulière dans les plans transversaux du cœur. Ces assemblages ne sont pas disposés jointifs afin d'éviter des interférences latérales entre les assemblages, dans le réacteur en fonctionnement.

On maintient donc un jeu de l'ordre de trois millimètres entre les faces latérales des prismes à base hexagonale constituant l'enveloppe extérieure des assemblages. Le maintien de ce jeu est assuré par des éléments de centrage tels que des pions disposés sur la plaque supérieure et sur le fond support du cœur coopérant avec des logements prévus dans les embouts correspondants des assemblages et permettant de maintenir les assemblages en position les uns par rapport aux autres latéralement. Un jeu doit être prévu entre les pions de centrage et leur logement, ce jeu étant généralement voisin d'un millimètre. Ces jeux permettent de compenser les défauts d'alignement entre les pions de centrage de la plaque supérieure de cœur et les pions correspondants du fond support de cœur et de compenser également les effets de la dilatation différentielle entre la plaque supérieure du cœur et la plaque inférieure de support de ce cœur.

Un jeu axial doit également être prévu pour éviter des interférences dans la direction axiale dues aux dilatations différentielles, entre les assemblages d'une part, la plaque supérieure et la plaque inférieure de support du cœur d'autre part.

Le fluide de réfrigération traversant le cœur à grande vitesse de bas en haut exerce sur les assemblages une force verticale tendant à les déplacer vers le haut. Des chocs entre les assemblages d'une part et la plaque supérieure ou la plaque inférieure de support du cœur d'autre part sont donc susceptibles de se produire lors des démarrages ou des arrêts des pompes primaires.

Pour remédier à cet inconvénient, on utilise des dispositifs de maintien permettant d'éviter les chocs entre les assemblages et les plaques supérieure et inférieure du cœur, tout en autorisant des déplacements axiaux relatifs dus aux dilatations.

On a par exemple utilisé des ressorts disposés entre la partie supérieure de l'assemblage et la plaque supérieure du cœur exerçant sur ces assemblages des forces verticales et dirigées vers le bas pour le maintien de ceux-ci contre la plaque inférieure de support du cœur. Cependant, ces ressorts exercent sur la structure des assemblages, c'est-à-dire sur les tubes de guidage reliés à chacun des embouts ou sur le boîtier de l'assemblage, des forces de compression qui peuvent entraîner un flambage de l'assemblage combustible.

On a également proposé (GB-A-1 159 971) d'accrocher l'assemblage sur la grille inférieure de support du cœur grâce à un ensemble comportant des leviers d'accrochage articulés sur la partie inférieure de l'assemblage, une tige montée coulissante dans la direction longitudinale de l'assemblage et portant une olive d'actionnement des leviers à sa partie inférieure et une douille solidaire de la partie supérieure de la tige permettant de manœuvrer cette tige. Un tel dispositif d'accrochage présente cependant l'inconvénient de comporter des éléments susceptibles de se détacher de l'assemblage et d'être entraînés dans le fluide de refroidissement du réacteur, ce qui peut provoquer des détériorations très importantes dans le réacteur. Si la tige de manœuvre se rompt en cours d'utilisation, l'olive risque d'être entraînée par le fluide de refroidissement ou de maintenir les leviers en position de verrouillage de l'assemblage et donc d'interdire le remplacement de la partie défectueuse du dispositif.

Le but de l'invention est donc de proposer un réacteur nucléaire comportant un cœur formé par des assemblages combustibles prismatiques disposés côte à côte à l'intérieur de la cuve du réacteur et constitués chacun par un faisceau de crayons combustibles parallèles placés entre deux embouts suivant la hauteur de l'assemblage, ou direction axiale, reposant verticalement sur une plaque inférieure de cœur par l'intermédiaire de l'embout inférieur en correspondance avec une ouverture ménagée dans la plaque, chacun des assemblages étant fixé sur la plaque inférieure de cœur par l'intermédiaire d'une pièce d'accrochage fixée à la partie centrale de l'ouverture et par un ensemble comportant un manchon expansible fixé sur l'embout inférieur, une tige montée coulissante dans un tube de guidage traversant l'assemblage dans la direction axiale et solidaire à son extrémité inférieure d'une olive de verrouillage d'un diamètre suffisant pour permettre l'expansion du manchon et son verrouillage sur la pièce d'accrochage par déplacement axial de la tige et une douille solidaire de l'extrémité supérieure de la tige comportant une surface de préhension pour un outil de levage permettant la manœuvre de la tige, réacteur nucléaire ne présentant pas les inconvénients évoqués dans l'exposé de l'art antérieur.

Dans ce but, la pièce d'accrochage comporte une ouverture axiale fermée à son extrémité inférieure, ménageant des surfaces d'accrochage du manchon expansible et comportant un prolongement dans sa partie inférieure d'une dimension suffisante pour contenir l'olive de verrouillage du manchon expansible, en cas de rupture de la tige coulissante.

Afin de bien faire comprendre l'invention, on va décrire à titre d'exemple non limitatif, en se référant aux figures jointes en annexe, un dispositif de fixation suivant l'invention pour un assemblage combustible à section hexagonale utilisé dans un réacteur nucléaire sous-modéré refroidi par de l'eau sous pression.

La figure 1 représente une vue en coupe par un plan vertical suivant A de la figure 2.

La figure 2 représente une demi-vue en coupe de l'assemblage suivant BB de la figure 1.

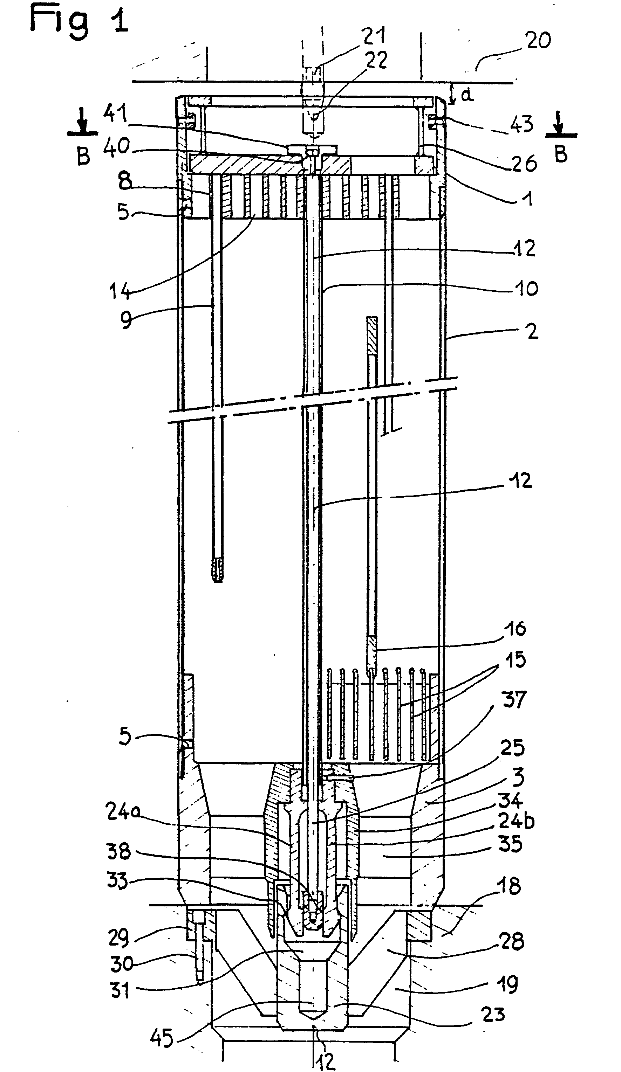

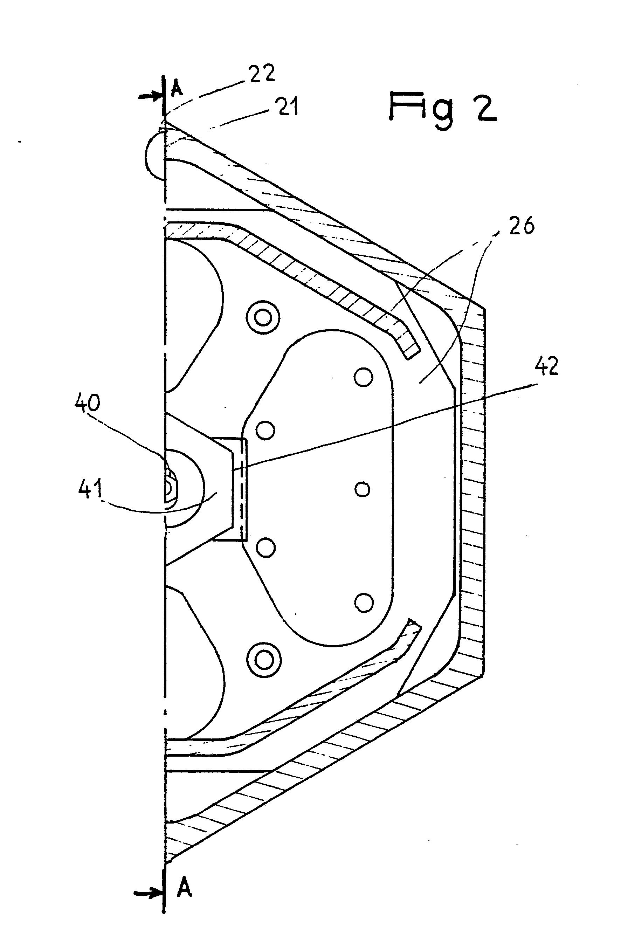

L'assemblage représenté sur les figures 1 et 2 comportent de haut en bas un embout supérieur 1, un boîtier 2 et un embout inférieur 3. Ces trois pièces à section hexagonale sont reliées entre elles par des vis 5.

L'embout supérieur 1 comporte des ouvertures circulaires 8 pour la fixation des tubes-guides 9 reliés par soudage à l'embout supérieur 1.

A la partie centrale de l'assemblage est fixé un tube-guide 10 dont l'axe est confondu avec l'axe 12 de l'assemblage et qui traverse celui-ci sur toute sa hauteur entre les deux embouts.

L'embout supérieur 1 est également percé d'ouvertures 14 permettant la circulation de l'eau sous pression de refroidissement de l'assemblage, dans la direction axiale.

L'embout inférieur 3 porte à sa partie supérieure une grille 15 pour la fixation des crayons combustibles fissiles ou fertiles 16, à l'intérieur du boîtier, suivant un réseau régulier à mailles triangulaires.

Chacun des crayons 16 est maintenu dans sa position dans le réseau par une entretoise constituée par un fil enroulé en hélice autour de sa surface extérieure. De cette façon, le rapport de modération reste très faible et le flux neutronique reste dans la gamme épithermique.

Dans un réacteur sous-modéré, on dispose une certaine partie de matériau fertile, par exemple de l'uranium appauvri en U 235, dans certaines parties des assemblages et dans certaines parties du cœur afin de produire du matériau fissile à partir du matériau fertile.

Dans sa partie disposée en dessous de la grille 15, l'embout inférieur de forme tubulaire, permet la canalisation de l'eau sous pression pénétrant dans l'assemblage.

Cet embout inférieur 3 repose sur la plaque inférieure de support du cœur 18 en concordance avec une ouverture 19 traversant cette plaque sur toute son épaisseur.

De cette façon, l'eau sous pression amenée sous la plaque inférieure de support du cœur traverse celle-ci par l'ouverture 19 puis pénètre dans l'assemblage par l'embout inférieur 3 qui la canalise avant sa mise en contact avec les crayons 16 fixés sur la grille 15.

La plaque inférieure 18 porte des pions de centrage non représentés qui sont engagés, lorsque l'assemblage est en place sur la plaque inférieure de support du cœur, tel que représenté à la figure 1, dans des ouvertures ménagées dans l'embout inférieur 3. De cette façon, l'assemblage est mis en position verticale de façon que son axe 12 corresponde avec l'axe de l'ouverture 19.

La plaque supérieure de cœur 20 disposée au-dessus des assemblages avec un jeu de l'ordre de 5 mm porte également des pions de centrage 21 qui s'engagent, lorsque l'assemblage est en place, dans des ouvertures correspondantes 22 ménagées dans l'embout supérieur 1.

Après chargement du cœur, lorsqu'on remet en place la plaque supérieure de cœur 20, l'ensemble des pions de centrage 21 vient se placer à l'intérieur des ouvertures 22 de chacun des assemblages.

Le dispositif de fixation de l'assemblage sur la plaque inférieure de support du cœur 18 comporte, en plus du tube-guide 10 traversant l'assemblage sur toute sa hauteur entre les embouts, une pièce d'accrochage 23 fixée sur la plaque inférieure de cœur, un manchon expansible 24, qui est ici réalisé sous forme d'un manchon à lames flexibles, fixé sur l'embout/inférieur de l'assemblage, une tige 25 montée coulissante dans le tube-guide 10 et une douille 26 reliée à l'extrémité supérieure de la tige 25.

La pièce d'accrochage 23 est constituée par un pommeau d'accrochage placé au centre de l'ouverture 19 de la plaque 18 et relié à celle-ci par un croisillon 28 solidaire d'une bague 29, elle-même fixée par des vis 30 sur la plaque 18, autour de l'ouverture 19.

Le pommeau 23 comporte une ouverture 31 symétrique de révolution autour de l'axe 12 de l'assemblage comportant une surface d'accrochage conique 33 évasée vers le bas.

L'embout inférieur 3 porte un moyeu central 34 par l'intermédiaire d'un croisillon 35, l'ouverture centrale de ce moyeu étant d'un diamètre légèrement supérieur au diamètre du pommeau d'accrochage 23.

Le manchon expansible 24 est fixé à l'intérieur du moyeu 34 par vissage et par blocage grâce à une goupille 37.

Ce manchon 24 comporte deux lames flexibles 24a et 24b solidaires de la partie supérieure du manchon permettant son accrochage sur le moyeu 34. La partie inférieure des lames 24a et 24b constitue une tête d'accrochage en deux parties comportant des surfaces coniques qui viennent en contact avec la surface 33 ménagée à l'intérieur du pommeau 23, lorsque ces lames sont dans leur position écartée, comme représenté à la figure 1.

Dans cette position, une olive 38 fixée à l'extrémité inférieure de la tige 25 permet de maintenir l'écartement des lames 24a et 24b. Le maintien en position de l'olive 38 interdit donc tout déplacement vertical de l'assemblage par rapport à la plaque 18, sous l'effet du fluide de refroidissement en circulation à très grande vitesse.

La longueur des pions de centrage non représentés, portés par la plaque 18 inférieure de support de cœur est telle qu'ils réalisent un premier centrage de l'assemblage par rapport à l'ouverture 19 et, par suite, par rapport au pommeau 23, avant l'introduction des lames 24a et 24b dans l'ouverture 31 du pommeau 23. Le moyeu 34 assure le guidage final et protège en outre les lames 24a et 24b lors des opérations de manutention. Ce moyeu 34 assure la protection en service des lames 24a et 24b vis-à-vis des vibrations générées par l'écoulement du fluide réfrigérant.

La tige coulissante 25 est solidaire, grâce à un contre-écrou 40, d'un écrou 41 fixé par vissage sur la douille 26 à sa partie centrale et freiné par une plaquette-frein 42.

La douille 26, la tige 25 et l'olive 38 forment donc un ensemble mobile en translation axiale par rapport à l'assemblage.

Une butée 43 fixée sur l'embout supérieur 1 permet de limiter le mouvement vers le haut de cet ensemble mobile.

Lorsque cet ensemble est en position basse comme représenté à la figure 1, la douille 26 vient reposer sur la surface supérieure de l'embout 1.

Lorsque l'ensemble est en position haute, l'olive 38 est dégagée de la tête du manchon expansible de telle sorte que les lames flexibles 24a et 24b peuvent se rapprocher l'une de l'autre par élasticité ou sous l'effet d'une traction exercée dans la direction verticale et de bas en haut sur l'assemblage.

Pour la mise en place de l'assemblage dans le cœur, celui-ci est amené dans sa position sur la plaque inférieure de cœur, les pions de centrage disposés autour de l'ouverture 19 venant s'engager dans l'embout inférieur 3 et l'olive 38 est maintenue en position dégagée par rapport à la tête du manchon expansible 24 si bien qu'au moment où l'assemblage vient reposer sur la plaque inférieure de cœur, le manchon 24 s'engage dans le pommeau 23 sous l'effet du poids de l'assemblage. On descend alors l'ensemble constitué par la douille 26, la tige 25 et l'olive 38 en position basse telle que représentée à la figure 1 pour réaliser le verrouillage de l'assemblage sur la plaque 18.

Lorsque le chargement du cœur est terminé, la plaque 20 est remise en place au-dessus de celui-ci, les pions de centrage 21 venant se placer dans les ouvertures correspondantes 22 des embouts supérieurs des assemblages.

Eventuellement, le verrouillage des manchons d'accrochage des assemblages par mouvement vers le bas de l'ensemble mobile portant l'olive 38 à sa partie inférieure peut être réalisé au moment où l'on vient placer la plaque supérieure de cœur, si la douille 26 est légèrement saillante à sa partie supérieure par rapport à l'assemblage.

Le verrouillage de l'assemblage permet d'éviter tout déplacement de celui-ci dans la direction verticale et vers le haut sous l'effet de la circulation de l'eau sous pression.

Pour le démontage de l'assemblage, après levage de la plaque supérieure de cœur 20, il suffit de soulever l'ensemble mobile 26-25-38 jusque dans sa position haute grâce à un outil de levage venant en prise avec la partie supérieure de la douille 26.

Dans sa position haute, l'olive 38 est dégagée de la tête du manchon si bien que les lames flexibles 24a et 24b peuvent se rapprocher lors du levage de l'assemblage pour son extraction du cœur.

L'ouverture centrale du pommeau 23 comporte un prolongement 45 à l'intérieur duquel on peut pousser l'olive 38 avec une tige de grande longueur après avoir retiré la plaquette-frein 42 et dévissé l'écrou 41, en cas de rupture de la tige coulissante 25. Ceci permet de déverrouiller le manchon lors d'une rupture éventuelle de la tige 25 qui serait alors inopérante et risquerait de conduire à l'impossibilité d'extraire l'assemblage. La chute de l'olive 38 dans le logement 45, soit par gravité, soit par poussée comme décrit ci-dessus, permet dans tous les cas de rupture la rétraction des lames 24a et 24b du manchon 24.

On voit donc que les principaux avantages du dispositif selon l'invention sont d'obtenir un verrouillage très efficace de l'assemblage par une manœuvre extrêmement simple grâce à un dispositif peu encombrant disposé dans sa totalité à la partie centrale de l'assemblage et de l'ouverture de la plaque inférieure de cœur, tout en présentant la possibilité d'extraction de l'assemblage en cas éventuel d'une rupture de la tige assurant la commande.

L'invention ne se limite pas au mode de réalisation qui vient d'être décrit ; elle en comporte au contraire toutes les variantes.

C'est ainsi que le manchon expansible peut comporter un nombre de lames supérieur à deux, que ces lames peuvent être articulées et non flexibles, qu'il peut être fixé d'une façon différente sur l'embout inférieur de l'assemblage et que la douille 26 peut être réalisée sous une forme différente de la forme hexagonale représentée à la figure 2. Il suffit d'assurer un guidage efficace entre cette douille et la surface intérieure de l'embout supérieur de l'assemblage.

Enfin le dispositif suivant l'invention est applicable non seulement dans le cas d'assemblages à section hexagonale tels qu'utilisés dans un réacteur sous-modéré mais également dans le cas d'assemblages hexagonaux utilisés dans des réacteurs à eau sous pression classiques ou encore dans le cas d'assemblages à sections carrées tels qu'utilisés dans les réacteurs nucléaires à eau sous pression de type le plus courant.

L'invention s'applique également dans le cas des assemblages d'un réacteur nucléaire à neutrons rapides refroidi au sodium liquide.

**Revendications**

1. Réacteur nucléaire comportant un cœur formé par des assemblages combustibles prismatiques disposés côte à côte à l'intérieur de la cuve du réacteur et constitués chacun par un faisceau de crayons combustibles (16) parallèles placés entre deux embouts (1, 3) suivant la hauteur de l'assemblage, ou direction axiale, reposant verticalement sur une plaque inférieure de cœur (18) par l'intermédiaire de l'embout inférieur (3), en correspondance avec une ouverture (19) ménagée dans la plaque (18), chacun des assemblages étant fixé sur la plaque inférieure de cœur (18) par l'intermédiaire d'une pièce d'accrochage (23) fixée à la partie centrale de l'ouverture (19) et par un ensemble comportant un manchon expansible (24) fixé sur l'embout inférieur (3), une tige (25) montée coulissante dans un tube de guidage traversant l'assemblage dans la direction axiale et solidaire à son extrémité inférieure d'une olive de verrouillage (38) d'un diamètre suffisant pour permettre l'expansion du manchon (24) et son verrouillage sur la pièce d'accrochage (23) par déplacement axial de la tige (25) et une douille (26) solidaire de l'extrémité supérieure de la tige (25) comportant une surface de préhension pour un outil de levage permettant la manœuvre de la tige (25), caractérisé par le fait que la pièce d'accrochage (23) comporte une ouverture axiale (31) fermée à son extrémité inférieure, ménageant des surfaces d'accrochage (33) du manchon expansible (24) et comportant un prolongement (45) dans sa partie inférieure, d'une dimension suffisante pour contenir l'olive (38) de verrouillage du manchon expansible (24), en cas de rupture de la tige coulissante (25).

2. Réacteur nucléaire selon la revendication 1, caractérisé par le fait que le manchon expansible (24) est fixé à l'intérieur d'un moyeu central (34) disposé suivant l'axe de l'embout inférieur (3) et à l'intérieur de celui-ci, ce moyen (34) permettant la protection et le guidage du manchon expansible (24), lors de son introduction dans la pièce d'accrochage (23).

**Claims**

1. Nuclear reactor comprising a core formed by prismatic fuel assemblies arranged side by side inside the reactor vessel and each consisting of a bundle of parallel fuel rods (16) located between two end nozzles (1, 3) in the longitudinal direction of the assembly, or axial direction, and resting vertically on a lower core plate (18) via the lower end nozzle (3) in correspondence with an opening (19) provided in this plate (18), each of the assemblies being connected to the lower core plate via a fastening element (23) secured to the central part of the opening (19) and by a unit comprising an expandable sleeve (24) secured to the lower end nozzle (3), a rod (25) slidably received in the guide tube passing through the assembly in the axial direction thereof and whose lower end is fast with a lock cam (38) having a sufficient diameter for expanding the sleeve (24) and locking the sleeve onto the fastening element (23) by axial movement of the rod (25) and a socket (26) fast with the upper end of the rod (25) and having a gripping surface for a lifting tool which makes it possible to move the rod (25), characterized in that the fastening element (23) has an axial opening (31) closed at its lower end, providing fastening surfaces (33) for the expandable sleeve (24) and having an extension (45) at its lower part of sufficient size for retaining the cam (38) for locking the expandable sleeve (24) in case of failure of the slidable rod (25).

2. Nuclear reactor according to claim 1, characterized in that the expandable sleeve (24) is fixed inside a central hub (34) arranged along the axis of the lower end (3) and inside the latter, the hub (34) permitting the protection and guiding of the expandable sleeve (24) when it is introduced into the fastening element (23).

**Patentansprüche**

1. Kernreaktor mit einem aus prismatischen Brennelementkassetten gebildeten Reaktorkern, wobei die Brennelementkassetten Seite an Seite im Reaktorbehälter angeordnet sind und jeweils aus einem Bündel Brennstäbe (16) bestehen, die zwischen zwei Einsätzen (1, 3) längs der Höhe der Kassetten oder deren Achsrichtung angeordnet sind und vertikal mittels des unteren Einsatzes (3), der mit einer in die Platte (18) eingearbeiteten Öffnung (19) in Verbindung steht, auf einer unteren Platte (18) des Reaktorkerns ruhen, und wobei jede Brennelementkassette auf der unteren Platte (18) des Reaktorkerns befestigt ist mittels eines Klammerstücks (23), das am mittleren Bereich der Öffnung (19) befestigt ist und mittels einer Anordnung bestehend aus einer auf dem unteren Einsatz (3) befestigten dehnbaren Manschette (24), einer gleitend in eine die Brennelementkassette in Achsrichtung durchquerenden Stange (25), die an ihrem unteren Ende mit einem Verriegelungsknopf (38) starr verbunden ist, dessen Durchmesser ausreicht um die Expansion der Manschette (24) und seine Verriegelung auf einem Klammerstück durch eine axiale Bewegung der Stange zu ermöglichen und einer mit dem oberen Ende der Stange (25) starr verbundenen Hülse (26), mit einer Greiffläche für ein Hebewerkzeug, mit dem die Stange (25) manövriert werden kann, dadurch gekennzeichnet, daß das Klammerstück (23) eine an ihrem unteren Ende geschlossene axiale Öffnung (31) aufweist, die die Halteflächen (33) der dehnbaren Manschette (24) durchquert und die in ihrem unteren Teil eine Verlängerung (45) aufweist, die ausreichend groß ist, um den Verriegelungsknopf (38) der dehnbaren Manschette (24) im Fall eines Bruchs des gleitend gelagerten Stabs (25) aufzunehmen.

2. Kernreaktor nach Anspruch 1, dadurch gekennzeichnet, daß die dehnbare Manschette (24) im Inneren eines zentralen Glieds (34) befestigt ist, das längs der Achse des unteren Einsatzes (3) und in dessen Innerem angeordnet ist, wobei dieses Glied (34) die dehnbare Manschette (24) führt und schützt, während diese in das Verriegelungsstück (23) eingeführt wird.

Fig 1

0 081 431

Fig 2